# EUROPEAN PATENT APPLICATION

(11) **EP 4 376 435 A1**
(43) Date of publication of application: **29.05.2024**
(21) Application number: 22845621.6
(22) Date of filing: 11.03.2022
(51) Int. Cl.: H04Q 9/00, H04W 4/38

(54) **INFORMATION PROCESSING SYSTEM, AND INFORMATION PROCESSING PROGRAM**

(30) Priority: 20.07.2021 JP 2021119632
(71) Applicant: KONICA MINOLTA, INC., Tokyo 100-7015 (JP)
(72) Inventor: YAMAGUCHI, Takehisa, Tokyo 100-7015 (JP)
(74) Representative: MFG Patentanwälte Meyer-Wildhagen Meggle-Freund Gerhard PartG mbB
(86) International application number: PCT/JP2022/010822
(87) International publication number: WO 2023/002681

(57) **Abstract**

Provided is an information processing system that enables data association between a plurality of terminal devices without using a time stamp.

An information processing system 1 including: a mobile camera 100 including: a wireless communication unit 101 that performs communication through a fifth-generation mobile communication system 200, a sensor including a camera and a clocking unit that receives, as clocking information, a signal from a global navigation satellite system; a server 400 that performs communication with the mobile camera 100 through the fifth-generation mobile communication system 200; and a data processing unit 402 that associates a plurality of pieces of data, in a case where a communication delay between the mobile camera 100 and the server 400 is not more than a predetermined time, such that data of the mobile camera 100 is data at a time identical to a time of the data of the mobile camera 100.

## Description

### Technical Field

The present invention relates to an information processing system and an information processing program.

### Background Art

In recent years, has been constructed a system including a plurality of terminal devices connected through a network to perform mutual data transmission and reception.

In order for data association between the plurality of terminal devices, each terminal device needs to perform processing of adding, as a time stamp, clocking information to data and aligning the times of the plurality of pieces of data using the time stamp.

In addition, for example, Patent Literature 1 discloses a technique for synchronizing a plurality of devices. According to the technique of Patent Literature 1, in mobile communication as one of representative networks, a plurality of base stations for mobile communication uses, as a common synchronous clock, a time signal from a GNSS (global navigation satellite system).

### Citation List

### Patent Literature

Patent Literature 1: JP H08-251654 A

### Summary of Invention

### Technical Problem

However, in the conventional technique, although phase synchronization can be made between base stations in mobile communication, synchronization between a plurality of terminal devices connected to the base stations is not considered. For this reason, in the conventional technique, in order for data association between the plurality of terminal devices, preprocessing for aligning a time stamp added to data by each terminal device is still necessary. Thus, in the conventional technique, it takes time to perform the preprocessing, leading to difficulty in immediate data association.

Therefore, an object of the present invention is to provide an information processing system and an information processing program that enable data association between a plurality of terminal devices without using a time stamp.

### Solution to Problem

The object of the present invention is achieved by the following means.
(1) An information processing system including:
   a terminal device including: a wireless communication unit that performs communication through a fifth-generation mobile communication system, a sensor including a camera; and a clocking unit that receives, as clocking information, a signal from a global navigation satellite system;
   a server that performs communication with the terminal device through the fifth-generation mobile communication system; and
   a data processing unit that associates a plurality of pieces of data, in a case where a communication delay between the terminal device and the server is not more than a predetermined time, such that data of the terminal device is data at a time identical to a time of the data of the terminal device.
(2) The information processing system according to (1) described above, in which the data processing unit selects a terminal device from among the plurality of terminal devices, based on positional information regarding each of the plurality of terminal devices obtained from the global navigation satellite system, such that the plurality of data is associated together.
(3) The information processing system according to (1) or (2) described above, in which the plurality of pieces of data includes image data shot by the camera.
(4) The information processing system according to any one of (1) to (3) described above, in which the clocking unit updates the clocking information within the predetermined time.
(5) The information processing system according to any one of (1) to (4), in which the plurality of pieces of data includes image data, and
   the predetermined time is less than a time for one frame.
(6) An information processing program for causing a computer to execute:
   performing communication through a fifth-generation mobile communication system between a server and a terminal device including a sensor including a camera, the terminal device receiving, as clocking information, a signal from a global navigation satellite system; and
   associating a plurality of pieces of data, in a case where a communication delay between the terminal device and the server is not more than a predetermined time, such that data of the terminal device is data at a time identical to a time of the data of the terminal device.
(7) The information processing program according to (6) described above, in which the associating the plurality of pieces of data includes selecting a terminal device from among the plurality of terminal devices, based on positional information regarding each of the plurality of terminal devices obtained from the global navigation satellite system, such that the plurality of data is associated together.
(8) The information processing program according to (6) or (7) described above, in which the plurality of pieces of data includes image data shot by the camera.
(9) The information processing program according to any one of (6) to (8), further including updating the clocking information within the predetermined time.
(10) The information processing program according to any one of (6) to (9), in which the plurality of pieces of data includes image data, and
   the predetermined time is less than a time for one frame.

### Advantageous Effects of Invention

According to the present invention, a terminal device and a server communicate mutually through a fifth-generation communication system, and the terminal device perform its internal clocking on the basis of a signal from a GNSS. As a result, the present invention enables association of data obtained from a plurality of terminal devices without using a time stamp.

### Brief Description of Drawings

Fig. 1 is a block diagram illustrating a schematic configuration of an information processing system according to an embodiment.
Fig. 2 is an explanatory block diagram illustrating functions of the information processing system according to the embodiment.
Fig. 3 is a block diagram illustrating an exemplary hardware configuration of a mobile camera.
Fig. 4 is a block diagram illustrating an exemplary hardware configuration of a fixed camera.
Fig. 5 is a block diagram illustrating an exemplary hardware configuration of a server.
Fig. 6 is a flowchart illustrating a procedure of processing by the server.

### Description of Embodiments

Hereinafter, embodiments of the present invention will be described with reference to the accompanying drawings. In the description of the drawings, the same elements are denoted with the same reference signs and redundant description will not be given. Further, the dimensional ratios in the drawings are exaggerated for the convenience of description, and thus may differ from the actual ratios.

### (Information Processing System)

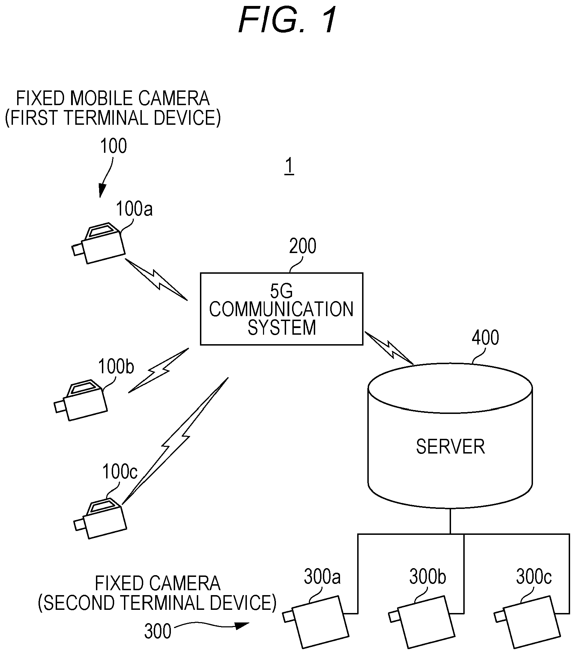

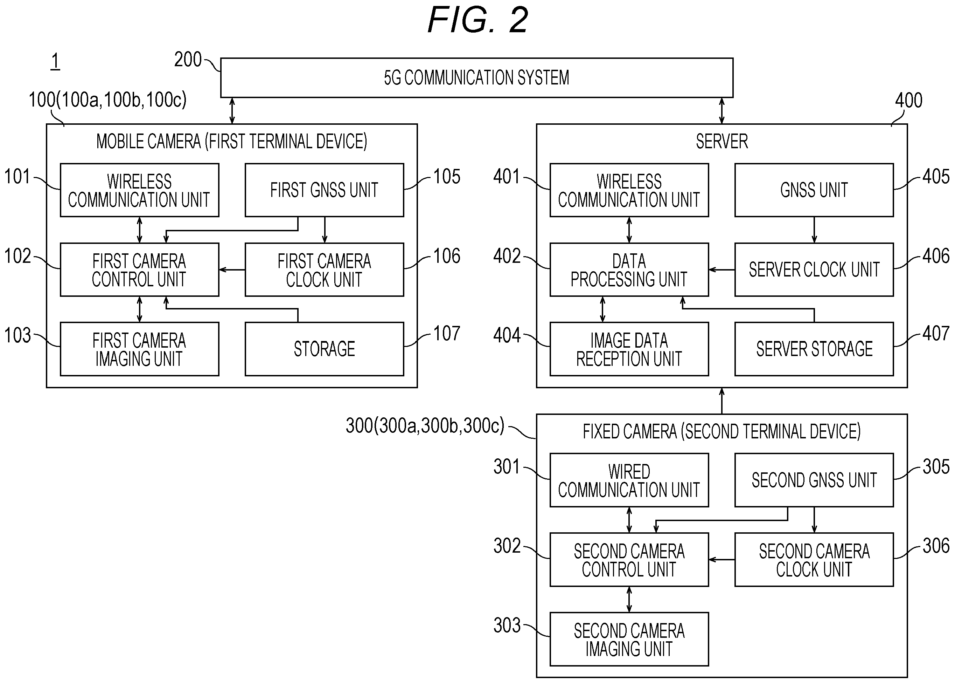

Fig. 1 is a block diagram illustrating a schematic configuration of an information processing system according to an embodiment. Fig. 2 is an explanatory block diagram illustrating functions of the information processing system according to the embodiment.

As illustrated in Figs. 1 and 2, an information processing system 1 according to the embodiment includes a mobile camera 100, a fifth-generation mobile communication system 200 (also referred to as a high-speed mobile communication system), a fixed camera 300, and a server 400.

### (Mobile Camera)

The mobile camera 100 is a first terminal device. In the present embodiment, a plurality of mobile cameras 100a, 100b, and 100c is provided. In the present embodiment, unless otherwise distinguished or for a collective term, the plurality of mobile cameras 100a, 100b, and 100c is each simply referred to as a mobile camera 100.

Each mobile camera 100 is connected to the server 400 through the 5G communication system 200. Therefore, each mobile camera 100 is also referred to as, for example, an edge device or an edge terminal, and is an electronic device that can also be used for IoT (Internet of Things). Each mobile camera 100 is, for example, a camera that is called, for example, a handy camera and can be freely moved. Further, each mobile camera 100 is, for example, a portable terminal device having a camera function, such as a smartphone or a tablet computer. The mobile cameras 100 are manually moved. The mobile cameras 100 may be attached to, for example, a vehicle that moves under the control of a person.

Further, the mobile cameras 100 may be each an autonomously movable device. Such an autonomously movable mobile camera 100 moves in response to an instruction of the position of a movement destination, from the server 400, for example. The autonomously movable mobile camera 100 may be, for example, a robot, an aerial drone, or an underwater drone. Further, the autonomously movable mobile camera 100 may be attached to a robot arm and moved by the robot arm.

The mobile cameras 100 may be each a night vision camera or an infrared camera (including a thermal camera), in addition to a visible light camera for shooting with visible light.

As illustrated in Fig. 2, the functions of such a mobile camera 100 as described above include a wireless communication unit 101, a first camera control unit 102, a first camera imaging unit 103, a first GNSS unit 105, a first camera clock unit 106, and a storage 107.

The wireless communication unit 101 performs communication based on 5G with the 5G communication system 200. The wireless communication unit 101 transmits data from the mobile camera 100 to the server 400 through the 5G communication system 200. Here, the data is mainly image data resulting from shooting by the mobile camera 100. Further, the wireless communication unit 101 receives data transmitted from the server 400 through the 5G communication system 200.

The first camera control unit 102 controls the mobile camera 100. The first camera control unit 102 transmits the image data resulting from shooting by the first camera imaging unit 103 to the server 400 through the wireless communication unit 101.

In the present embodiment, association and analysis processing of a plurality of pieces of data based on artificial intelligence (AI) are performed by the server 400 to be described later. A machine learning model (AI model) learned by AI in advance is used for the association and analysis processing of the plurality of pieces of data, based on AI.

However, the association and analysis processing of the plurality of pieces of data, based on AI, may be performed by the mobile camera 100. In this case, the first camera control unit 102 is a computer that causes the mobile camera 100 to perform a specific function.

In order for causing the first camera control unit 102 to perform the association and analysis processing of the plurality of pieces of data, based on AI, a program for the association and analysis processing is transmitted from the server 400 in response to a request from the first camera control unit 102 or in response to determination on the server 400 side. The program transmitted from the server 400 is stored in a memory in an FPGA (field programmable gate array) (to be described later) or the storage 107 and appropriately read, so that various pieces of analysis and processing are performed. Therefore, in order for performing the association and analysis processing of the plurality of pieces of data, based on AI, the first camera control unit 102 functions as a data processing unit.

The AI model is provided as a control program and/or logic data on the basis of the hardware configuration of the mobile camera 100. The hardware configuration of the mobile camera 100 will be described later, and, for example, in a case where the hardware configuration mainly includes a central processing unit (CPU), the AI model is provided as a control program. Alternatively, in a case where the hardware configuration includes rewritable hardware such as an FPGA, the AI model is provided as logic data. The logic data may also be referred to as programmable logic. In the case of the FPGA, part or all of the settings may be provided as a control program.

The first camera imaging unit 103 includes an image sensor for shooting a moving image. The image sensor is, for example, a visible light image sensor (moving image shooting camera) or an infrared image sensor. The first camera imaging unit 103 shoots, a visible light image with the visible light image sensor or an infrared image with the infrared image sensor, for example. The first camera imaging unit 103 shoots in response to the timing of a clock signal supplied from the first camera clock unit 106. A shot moving image is transmitted as image data to the server 400 through the wireless communication unit. Further, a shot image may be stored in the storage 107 as image data.

The first camera imaging unit 103 may include a zoom lens. The magnification of the zoom lens is changed under the control of the first camera control unit 102. Alternatively, the magnification of the zoom lens may be changed by a person (user) as appropriate.

The mobile camera 100 may include a sensor different from the camera (image sensor). As the sensor different from the camera, for example, can be used various sensors such as an acoustic sensor that detects sound like a microphone, an altitude sensor that detects altitude (height above the sea level), an atmospheric pressure sensor, a depth sensor (water pressure sensor) in water, a vibration sensor, an azimuth sensor, an angle sensor, a temperature sensor, a voltage sensor, a current sensor, and a power sensor. Data resulting from detection by such a sensor as described above is transmitted to the server 400 as necessary. Further, the data detected by the sensor is also stored in the storage 107 as necessary.

As is well known, the first GNSS unit 105 is a navigation system using a satellite. The first GNSS unit 105 recognizes the coordinates of the current position of the mobile camera 100. The first GNSS unit 105 includes a GNSS receiver that receives a signal (radio wave) at UTC (universal time coordinated) from a GNSS satellite.

The first GNSS unit 105 transmits the positioning result to the first camera control unit 102. As a result, the first camera control unit 102 grasps the current position of the mobile camera 100 and transmits the current position to the server 400 as necessary. At this time, the first camera control unit 102 also transmits the shooting direction of the mobile camera 100 to the server 400.

Examples of the global navigation satellite system include a GPS (global positioning system) in the United States, a QZSS (quasi-zenith satellite system) in Japan, GLONASS in Russia, Galileo in the European Union.

The first camera clock unit 106 is a clocking unit. The first camera clock unit 106 generates, from the UTC signal received by the first GNSS unit 105, a clock signal to be used for control in the mobile camera 100. The clock signal is clocking information (also referred to as time information). Such a clock signal is generated from the UTC signal received by the first GNSS unit 105. The generated clock signal has an error within 1 µsec, and the time obtained from the clock signal is also within a similar error to UTC. Therefore, the mobile camera 100 shoots an image at timing based on the UTC signal, and the image data is transmitted to the server 400 and stored, for example, in the storage 107 as necessary.

The first camera clock unit 106 updates the clock signal on the basis of the UTC signal obtained from the first GNSS unit 105, every predetermined time. For example, the predetermined time is preferably less than the time for one frame in accordance with the frame rate of the image data (moving image). Specifically, for example, in the case of 30 fps, the predetermined time is preferably less than 33 msec. In association of a plurality of pieces of image data, when the time of the image data of 30 fps is shifted by 33 msec or more, synchronization is shifted by one frame or more. Therefore, in order to prevent the time shift of the image data, as described above, it is preferable to update the generated clock signal in accordance with UTC less than the time for one frame.

The storage 107 is a storage unit. The storage 107 stores image data. Further, in a case where an AI model is performed by the mobile camera 100, the storage 107 may store the AI model as a control program and/or logic data.

The storage 107 is, for example, a storage medium such as an eMMC (embedded multimedia card), an SSD (solid state drive), or an HDD (hard disk drive). Alternatively, the storage 107 may be a portable storage medium such as a memory card.

Note that it is not necessary to store such all data as described above in the storage 107, and thus it is sufficient if the capacity of the storage 107 is determined in accordance with, for example, the cost of the mobile camera 100 and the content to be stored is determined or changed on the basis of the capacity. In addition, the storage 107 may not be provided.

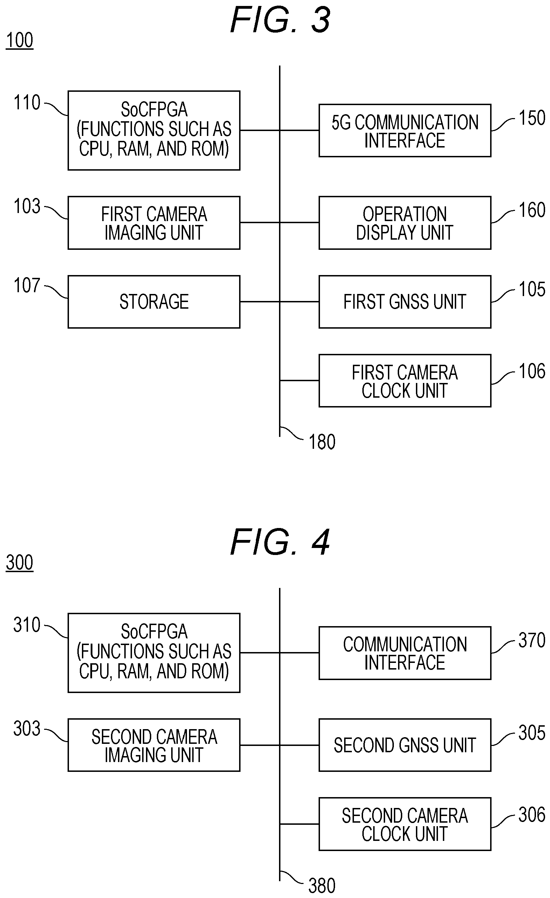

Fig. 3 is a block diagram illustrating an exemplary hardware configuration of the mobile camera 100.

In the present embodiment, a case of an FPGA will be described as an example.

As illustrated in Fig. 3, the mobile camera 100 includes an SoCFPGA (system-on-chip FPGA) 110, the first camera imaging unit 103, a 5G communication interface 150, an operation display unit 160, the first GNSS unit 105, the first camera clock unit 106, and the storage 107. The components are each connected through a bus 180. The first camera imaging unit 103, the first GNSS unit 105, the first camera clock unit 106, and the storage 107 are as described above.

The SoCFPGA 110 mainly functions as the first camera control unit 102. The SoCFPGA 110 is a semiconductor element (including a semiconductor element with a plurality of chips bonded together), and as a system, an FPGA that is rewritable the details of processing to be executed is formed on a single chip. The SoCFPGA 110 may also be referred to as a programmable SoC. The SoCFPGA 110 has functions of, for example, a CPU (central processing unit) serving as an arithmetic element, a ROM (read only memory) serving as a storage element (memory), and a RAM (random access memory) serving as a storage element (memory) formed on the single chip (or a plurality of chips having a plurality of these functions is integrated). Further, the SoCFPGA 110 may be equipped with an accelerator such a GPU (graphics processing unit)/DSP (digital signal processor). Therefore, the mobile camera 100 is a computer.

Such an SoCFPGA 110 stores a control program and/or logic data necessary for operation (including rewriting of a gate circuit in the FPGA), and executes the control program and/or logic data, resulting in achievement of the functions of the respective components of the mobile camera 100. Further, the SoCFPGA 110 executes AI processing due to writing of logic data necessary for the AI processing.

The 5G communication interface 150 is the wireless communication unit 101 for communication with the 5G communication system 200, and includes a chip of a communication module. The 5G communication interface 150 may also be integrated as the SoCFPGA 110. Note that the mobile camera 100 may be provided with, for example, Ethernet (registered trademark), a network interface based on a standard such as IEEE 1394, Bluetooth (registered trademark), or a wireless communication interface such as IEEE 802.11, in addition to the communication interface based on 5G.

The operation display unit 160 is, for example, a touch panel display, displays various types of information, and receives various inputs from the user. Further, the mobile camera 100 may have, for example, an input button and a monitor attached to the mobile camera 100. Furthermore, the mobile camera 100 may have a viewer for image confirmation that functions as a display unit.

Note that the mobile camera 100 is not limited to the SoCFPGA 110, and may be an FPGA different from an SoC, or may have, for example, a CPU, a RAM, and a ROM that are independent and connected through a bus.

### (Communication System)

The 5G communication system 200 has a wireless communication function based on 5G and controls communication between the mobile camera 100 and the server 400.

The 5G communication system 200 is a known 5G communication system, has, for example, a wireless communication control function and a relay processing function (not illustrated), and connects the mobile camera 100 and the server 400 resulting from communication based on 5G.

The 5G communication system 200 of the present embodiment is referred to as, for example, a private 5G or a local 5G, and is used only by a specific user. Further, the 5G communication system 200 of the present embodiment is preferably connected to the same base station together with the server 400 and a plurality of terminal devices.

In the 5G communication system, a communication delay in the same base station is secured to be less than 10 msec. The time for one frame of image data is 33 msec at a frame rate of 30 fps, and 16 ms at a frame rate of 60 fps. Therefore, in transmission of image data by a plurality of terminal devices to the server 400 through the 5G communication system, the communication delay is less than the time for one frame.

### (Fixed Camera)

The fixed camera 300 is a second terminal device. In the present embodiment, a plurality of fixed cameras 300a, 300b, and 300c is provided. In the present embodiment, unless otherwise distinguished or for a collective term, the plurality of fixed cameras 300a, 300b, and 300c is each simply referred to as a fixed camera 300.

Each fixed camera 300 is connected to server 400. The shooting operation of such a fixed camera 300 as described above is controlled by, for example, the server 400 or a control computer different from the server 400. Further, the fixed camera 300 may be changeable in its orientation (upward, downward, leftward, and rightward swing angles). The orientation of the fixed camera 300 is preferably operated remotely. Furthermore, the fixed camera 300 may have a zoom function.

The fixed camera 300 may be a night vision camera or an infrared camera (including a thermal camera), in addition to a visible light camera for shooting with visible light.

As illustrated in Fig. 2, the functions of the fixed camera 300 include a wired communication unit 301, a second camera control unit 302, a second camera imaging unit 303, a second GNSS unit 305, and a second camera clock unit 306.

These components of the fixed camera 300 has functions similar to those of the first camera control unit 102, the first camera imaging unit 103, the first GNSS unit 105, and the first camera clock unit 106 of the first camera described above, and thus the detailed description thereof will not be given.

Therefore, similarly to the mobile camera 100, the second camera imaging unit 303 of the fixed camera 300 shoots a moving image at the timing of a clock signal based on a UTC signal. The image data are preferably the same in frame rate and resolution as the mobile camera 100. Making of the frame rate and the resolution the same results in association without causing a processing delay. The image data may be different in frame rate and resolution from the mobile camera 100. In difference in frame rate and/or resolution between the fixed camera 300 and the mobile camera 100, processing of aligning the frame rate and/or resolution may be performed for AI processing or three-dimensional (3D) visualization.

The fixed camera 300 includes the wired communication unit 301 for connection with the server 400. The fixed camera 300 may include a wireless communication unit instead of the wired communication unit 301 or together with the wired communication unit 301, and may be connected to the server 400 due to wireless communication.

The second camera control unit 302 of the fixed camera 300 transmits data of a shot image to the server 400 through the wired communication unit 301.

Further, the fixed camera 300 may also have an analysis processing function, based on AI, similarly to the mobile camera 100.

Fig. 4 is a block diagram illustrating an exemplary hardware configuration of the fixed camera 300.

The fixed camera 300 also includes an FPGA. As illustrated in Fig. 4, the fixed camera 300 includes an SoCFPGA 310, the second camera imaging unit 303, a communication interface 370, the second GNSS unit 305, and the second camera clock unit 306. The components are each connected through a bus 380. These hardware components are similar to those of the mobile camera 100, and thus the description thereof will not be given. Note that in the present embodiment, data of an image shot by the fixed camera 300 is constantly transmitted to the server 400. Therefore, the fixed camera 300 is not provided with a storage 107. However, the present embodiment is not limited thereto, and thus the fixed camera 300 may also be provided with the storage 107.

The communication interface 370 functions as the wired communication unit 301. The communication interface 370 is, for example, a network interface based on a standard such as Ethernet (registered trademark) (wired local area network (LAN)), PCI (peripheral component interconnect) Express, USB (universal serial bus), or IEEE 1394; or a high-definition multimedia interface (HDMI) (registered trademark). Further, as the communication interface 370, a wireless communication interface different from 5G, such as Bluetooth (registered trademark) or IEEE 802.11, may be used. Furthermore, a 5G communication system may also be used for communication between the fixed camera 300 and the server 400.

### (Server)

The server 400 associates image data transmitted from the mobile camera 100 and/or the fixed camera 300.

The server 400 includes a wireless communication unit 401, a data processing unit 402, an image data reception unit 404, a GNSS unit 405, a server clock unit 406, and a server storage 407.

The wireless communication unit 401 performs communication based on 5G with the 5G communication system 200. The wireless communication unit 401 transmits data from the server 400 to the mobile camera 100 through the 5G communication system 200. Further, the wireless communication unit 401 receives data transmitted from the mobile camera 100 through the 5G communication system 200.

In the present embodiment, the data processing unit 402 associates a plurality of pieces of image data to create a 3D visualization image (moving image or still image), based on AI. In the present embodiment, the data to be associated is image data received from the mobile camera 100 and/or image data received from the fixed camera 300.

The data processing unit 402 associates the plurality of pieces of image data in the received state without being subjected to preprocessing such as clocking information alignment. As described above, the plurality of pieces of image data is shot on the basis of the UTC signal received from the GNSS. For this reason, the plurality of pieces of image data is synchronized even if the plurality of pieces of image data is used as it is without being subjected to preprocessing such as time stamp alignment as in the conventional art.

Further, the data processing unit 402 performs analysis processing based on AI on the image data. In the analysis processing based on AI, performed are, for example, recognition of a person or an object in an image (frame), recognition of the face or skeleton of a person, recognition of movement of a person (or an object), and determination of an attribute of a person (or an object). Here, the object includes gas (gaseous flow), flame, water flow, for example. The AI model may be changed in accordance with the details of the processing.

Similarly to the mobile camera 100 and the fixed camera 300, the GNSS unit 405 and the server clock unit 406 of the server 400 generate a clock signal to be used in the server 400, from the UTC signal of the GNSS. Therefore, the functions of the GNSS unit and the server clock unit are similar to those of the first GNSS unit and the first clock unit that have already been described, and the detailed description thereof will not be given. Also in the server 400, the generation of the clock signal from the UTC signal of the GNSS results in synchronization between the terminal device and the entire information processing system 1, without being subjected to processing of time axes alignment.

Note that in order to associate a plurality of pieces of image data, the UTC signal of the GNSS may not be used. At the time of image data association, the plurality of pieces of image data is synchronized by using the UTC signal of the GNSS. Therefore, even if there is no synchronization with the clock signal in the server 400, association of the plurality of pieces of image data is possible.

The server storage 407 stores the data processed by the data processing unit 402. Further, the server storage 407 stores the image data received from the mobile camera 100 and/or the fixed camera 300.

The image data reception unit 404 receives the image data from the fixed camera 300.

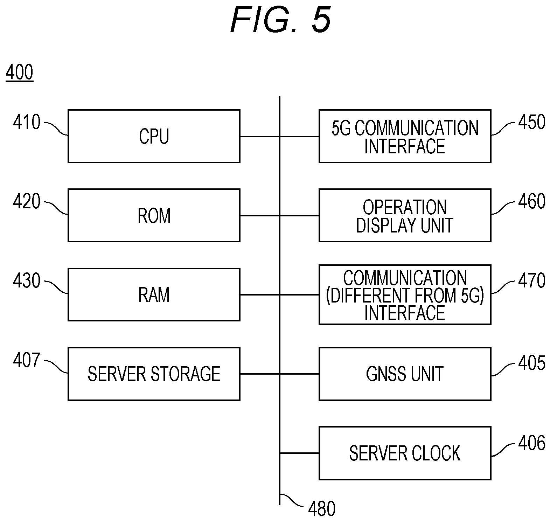

Fig. 5 is a block diagram illustrating an exemplary hardware configuration of the server 400.

The server 400 is a computer. As illustrated in Fig. 5, the server 400 includes a CPU 410, a ROM 420, a RAM 430, the server storage 407, a 5G communication interface 450, an operation display unit 460, a communication (different from 5G) interface 470, the GNSS unit, and the server clock unit 406. The components are each connected through a bus 480. The GNSS unit and the server clock unit 406 are as described above.

The CPU 410 executes a program recorded in the ROM 420 or the server storage 407 to perform the respective functions of the components of the server 400 described above.

The ROM 420 stores various programs and various types of data.

The RAM 430 temporarily stores programs and data as a work area.

The server storage 407 stores various programs including an operating system and various types of data. The server storage 407 stores a control program and/or logic data.

In the case of the server 400, a large-capacity storage medium such as an HDD is mainly used as the server storage 407. Alternatively, as the server storage 407, a semiconductor storage medium such as an eMMC or an SSD may be used together with the HDD or instead of the HDD.

The 5G communication interface 450 is the wireless communication unit 401 for communication with the 5G communication system 200.

The operation display unit 460 is, for example, a touch panel display, displays various types of information, and receives various inputs from the user. Further, as the operation display unit 460, an input device such as a keyboard or a mouse and a monitor may be connected.

The communication (different from 5G) interface 470 is the image data reception unit 404. As the communication (different from 5G) interface 470, used is an interface based on a standard corresponding to the communication interface 370 of the fixed camera 300. Further, the communication (different from 5G) interface 470 may be used to connect a computer different from the fixed camera 300.

### (Processing Procedure)

Next, a processing procedure in the embodiment will be described.

Here, the processing procedure will be described on the basis of the following premise. The information processing system 1 is a gas leakage monitoring system. A mobile camera 100 and a fixed camera 300 to be used are infrared cameras capable of shooting a gas having a component that has leaked into the air and different from air, in particular, a combustible gas. The server 400 performs AI processing on the image data to determine whether or not a gas having a component different from air has leaked, and associates the image data of the mobile camera 100 and the image data of the fixed camera 300. Needless to say, the information processing system 1 of the present embodiment is not limited to the gas leakage monitoring system.

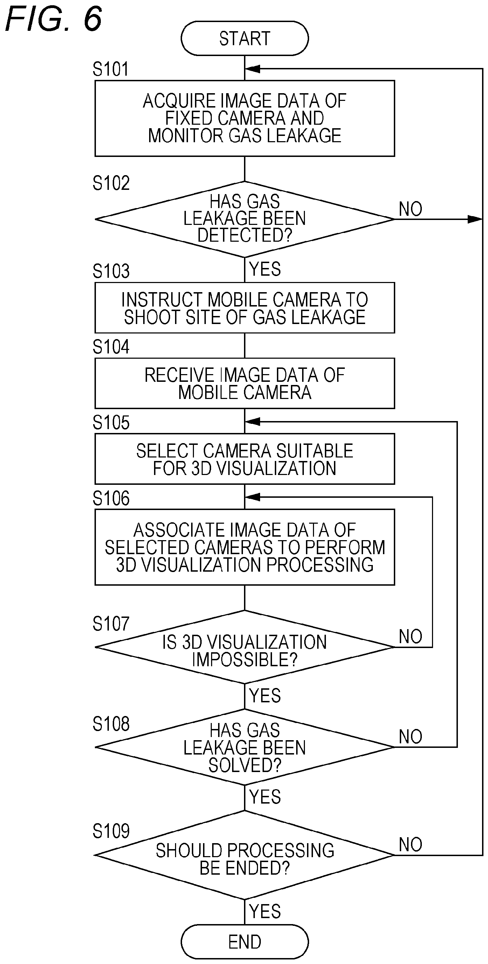

Fig. 6 is a flowchart illustrating the procedure of processing by the server 400.

First, the server 400 acquires image data from a fixed camera 300 at a predetermined place (e.g., in a facility), and monitors, on the basis of analysis processing based on AI, whether gas leakage has occurred (S101). At this stage, no mobile camera 100 is operated.

In a case where gas leakage is not detected (S102: NO), the server 400 returns to the step S101 to continue monitoring.

Otherwise, in a case where gas leakage has been detected (S102: YES), the server 400 instructs at least one mobile camera 100 to shoot an image of the site (S103). The shooting instruction for such a mobile camera 100 as above may be displayed on the operation display unit 460 of the server 400, or the shooting instruction may be transmitted from the server 400 to the mobile camera 100 and displayed on the operation display unit 160 of the mobile camera 100. Alternatively, the shooting instruction for the mobile camera 100 may be displayed on another computer (including, for example, a smartphone or a tablet terminal) connected to the server 400.

Subsequently, the server 400 receives the image data transmitted from the mobile camera 100 (S104).

Subsequently, in a case where the server 400 has received the image data from a plurality of mobile cameras 100, the server 400 acquires the positional information regarding each of the plurality of mobile cameras 100 and selects a mobile camera 100 suitable for 3D visualization (S105).

The server 400 creates a 3D visualization image from the at least two pieces of image data. At this time, one of the image data to be used is image data from the fixed camera 300, and the other is image data from the mobile camera 100. However, images suitable for 3D visualization need to be shot from directions intersecting each other with respect to the object. Therefore, for example, the shooting directions of the two cameras preferably intersect at 45 degrees, and more preferably intersect at 90 degrees. Note that each shooting direction defines as a direction at the camera is facing in a case where the object is substantially in the center of the image.

For this purpose, the server 400 acquires and compares the positional information and the shooting direction of the single fixed camera 300 having detected gas leakage with the current position and the shooting direction of the mobile camera 100. Then, the server 400 selects a single mobile camera 100 of which the shooting direction intersects the shooting direction of the fixed camera 300 preferably at 90° ± 45°.

Note that, in the step S105, the pair of the fixed camera 300 and the mobile camera 100 is selected, but the present invention is not limited thereto. In the step S105, if two or more mobile cameras 100 at positions and shooting directions suitable for 3D visualization, the server 400 may select the two or more cameras 100.

Subsequently, the server 400 associates the two pieces of image data of the selected fixed camera 300 and the selected mobile camera 100 to perform 3D visualization processing (S106). At this time, the server 400 treats the two pieces of image data as data identical in time, and does not perform preprocessing such as time alignment using a time stamp. The data identical in time means that a plurality of pieces of data flows at the same time. For example, in a case where the frame rates of a plurality of pieces of image data (moving images) are the same, the data at identical in time has an extremely small error in the time during which one frame advances, and in the present embodiment, the error falls within the error range of the UTC signal from the GNSS.

The plurality of pieces of image data is shot at the timing based on the UTC signal from the GNSS. Therefore, even if the server 400 associates both pieces of image data at the timing of receiving the pieces of image data, the pieces of image data are synchronized with each other, resulting in elimination of time alignment processing.

Subsequently, the server 400 determines whether or not 3D visualization is impossible (S107). In order to obtain a good 3D visualization image, as described above, there are a certain degree of restrictions on the positions and shooting directions of the cameras. Further, gas leakage state is absent in some cases. Examples of the cases where gas leakage state is absent include a case where gas flows out of the shooting range of the mobile camera 100 and/or the fixed camera 300, a case where gas flows to be behind an object, and a case where gas leakage has been solved. In such cases, the server 400 no longer perform 3D visualization processing. S107 is a step for making a determination assuming that such 3D visualization processing is impossible.

In S107, in a case where 3D visualization processing is not impossible (S107: NO), the server 400 directly returns to S106 and continues the 3D visualization processing.

Otherwise, in a case where 3D visualization processing is impossible (S107: YES), subsequently, the server 400 determines whether or not the gas leakage has been resolved (S108). One of the causes of failure in 3D visualization is absence of gas leakage. The case of absence of gas leakage includes a case where the gas leakage has been solved in the first place. S108 is a step for making a determination assuming that such gas leakage has been solved.

Note that, as described above, the present embodiment can also use an autonomously movable mobile camera 100. As a procedure in that case, included may be a step for instructing the mobile camera 100 from the server 400 to move to a place where gas leakage can be detected in a case where 3D visualization processing is possible.

In S108, in a case where the gas leakage has not been solved (S108: NO), the server 400 returns to the step S105 and again selects a camera suitable for 3D visualization. Thereafter, the server 400 continues the processing.

Otherwise, in a case where the gas leakage has been solved (S108: YES), subsequently, if no instruction on end of the processing has been received (S109: NO), the server 400 returns to S101 and continues the subsequent processing. At this time, an instruction on end of the operation is given to the mobile camera 100 having been shooting. Otherwise, in a case where an instruction on end of the processing has been received (S109: YES), the server 400 ends the gas leakage monitoring processing (END).

According to the present embodiment described above, the following functions and effects are exerted.

According to the present embodiment, a mobile camera 100 and the server 400 communicate mutually through the fifth-generation communication system. The communication delay in the same base station in the 5G communication system is less than 10 ms that is shorter than the time for one frame of image data.

Further, the mobile camera 100 and a fixed camera 300 perform internal clocking on the basis of a UTC signal from the GNSS. Therefore, both the mobile camera 100 and the fixed camera 300 can acquire accurate clocking information from the time of activation. As a result, the data of the mobile camera 100 and the data of the fixed camera 300 are identical in time. Further, in the present embodiment, because the clock signal (clocking information) is updated every predetermined time, the mobile camera 100 and the fixed camera 300 can be operated with absolute clocking information.

As a result, in the present embodiment, in association of a plurality of pieces of data, processing of synchronization between data is eliminated (or can be simplified).

Therefore, in the present embodiment, in data association, data can be associated together without using a time stamp. Note that in the present embodiment, a time stamp does not need to be added to image data. However, a time stamp may be given by a person (user) to check a lapse of time in the image (moving image).

Further, in the present embodiment, time synchronization is eliminated in afterward connection of the image data acquired by constant shooing to image data.

Furthermore, in the present embodiment, time synchronization is eliminated in switching of data from a terminal device different from the terminal device that has been synchronized so far, resulting in immediate data switching and data association.

Although the embodiments of the present invention have been described above, the present invention is not limited to the above-described embodiments. The conditions, numerical values, and others used in the description of the embodiments are merely for description, and thus the present invention is not limited to these conditions and numerical values.

In the above-described embodiments, described has been each example in which the plurality of mobile cameras 100 and the plurality of fixed cameras 300 are used. The information processing system 1 of the present invention, however, may include the plurality of mobile cameras 100 and the server 400. Alternatively, the information processing system 1 of the present invention may include the plurality of mobile cameras 100 and the plurality of fixed cameras 300, or may include only the plurality of mobile cameras 100. In the information processing system 1 having such a configuration, for example, any one of the plurality of mobile cameras 100 includes the data processing unit 402 and functions as the server 400.

Further, in the embodiments, the 3D visualization processing has been described as an example of data association between the plurality of pieces of data, but the present invention is not limited to such an example. Examples of the association between the plurality of pieces of data include connection or combination of a plurality of pieces of image data. Furthermore, the association between the plurality of pieces of data is not necessarily processing based on AI, and thus image data may be simply connected or combined.

Still furthermore, the information processing program according to the present invention can also be achieved by a dedicated hardware circuit. Still furthermore, the information processing program can be provided with a computer readable recording medium such as a USB (universal serial bus) memory or a DVD (digital versatile disc)-ROM (read only memory). Alternatively, the information processing program can also be provided online through a network such as the Internet, instead of a recording medium. In a case of being provided online, the data input control program is recorded in a recording medium such as a magnetic disk in a computer connected to a network.

Still furthermore, the present invention can be variously modified on the basis of the configuration described in the claims, and the modifications are also within the scope of the present invention.

The present application is based on Japanese Patent Application (JP 2021-119632) filed on July 20, 2021, the disclosure content of which is incorporated herein by reference in its entirety.

### Reference Signs List

- 1: Information processing system
- 100: Mobile camera
- 101, 401: Wireless communication unit
- 102: First camera control unit
- 103: First camera imaging unit
- 105: First GNSS unit
- 106: First camera clock unit
- 107: Storage
- 150, 450: 5G communication interface
- 200: 5G communication system
- 300: Fixed camera
- 301: Wired communication unit
- 302: Second camera control unit
- 303: Second camera imaging unit
- 305: Second GNSS unit
- 306: Second camera clock unit
- 400: Server
- 402: Data processing unit
- 404: Image data reception unit
- 405: GNSS unit
- 406: Server clock unit
- 407: Server Storage

## Claims

1. An information processing system comprising:
a terminal device including: a wireless communication unit that performs communication through a fifth-generation mobile communication system, a sensor including a camera; and a clocking unit that receives, as clocking information, a signal from a global navigation satellite system;
a server that performs communication with the terminal device through the fifth-generation mobile communication system; and
a data processing unit that associates a plurality of pieces of data, in a case where a communication delay between the terminal device and the server is not more than a predetermined time, such that data of the terminal device is data at a time identical to a time of the data of the terminal device.

2. The information processing system according to claim 1, wherein the data processing unit selects a terminal device from among the plurality of terminal devices, based on positional information regarding each of the plurality of terminal devices obtained from the global navigation satellite system, such that the plurality of data is associated together.

3. The information processing system according to claim 1 or 2, wherein the plurality of pieces of data includes image data shot by the camera.

4. The information processing system according to any one of claims 1 to 3, wherein the clocking unit updates the clocking information within the predetermined time.

5. The information processing system according to any one of claims 1 to 4, wherein the plurality of pieces of data includes image data, and
the predetermined time is less than a time for one frame.

6. An information processing program for causing a computer to execute:
performing communication through a fifth-generation mobile communication system between a server and a terminal device including a sensor including a camera, the terminal device receiving, as clocking information, a signal from a global navigation satellite system; and
associating a plurality of pieces of data, in a case where a communication delay between the terminal device and the server is not more than a predetermined time, such that data of the terminal device is data at a time identical to a time of the data of the terminal device.

7. The information processing program according to claim 6, wherein the associating the plurality of pieces of data includes selecting a terminal device from among the plurality of terminal devices, based on positional information regarding each of the plurality of terminal devices obtained from the global navigation satellite system, such that the plurality of data is associated together.

8. The information processing program according to claim 6 or 7, wherein the plurality of pieces of data includes image data shot by the camera.

9. The information processing program according to any one of claims 6 to 8, further comprising updating the clocking information within the predetermined time.

10. The information processing program according to any one of claims 6 to 9, wherein the plurality of pieces of data includes image data, and
the predetermined time is less than a time for one frame.
